(19) Europäisches Patentamt
European Patent Office
Office européen des brevets

(11) Veröffentlichungsnummer: **0 232 731 B1**

(12) **EUROPÄISCHE PATENTSCHRIFT**

(45) Veröffentlichungstag der Patentschrift: **07.08.91**

(51) Int. Cl.5: **B01D 53/36**, B01D 53/34

(21) Anmeldenummer: **87100363.8**

(22) Anmeldetag: **14.01.87**

(54) **Verfahren und Vorrichtung zur Reinigung von Gasen, insbesondere zur Entschwefelung und Entstickung von Rauchgasen.**

(30) Priorität: **11.02.86 DE 3604204**

(43) Veröffentlichungstag der Anmeldung:
**19.08.87 Patentblatt 87/34**

(45) Bekanntmachung des Hinweises auf die Patenterteilung:
**07.08.91 Patentblatt 91/32**

(84) Benannte Vertragsstaaten:
**AT BE GB IT NL**

(56) Entgegenhaltungen:
**EP-A- 0 193 135**
**DE-A- 2 911 712**

(73) Patentinhaber: **Uhde GmbH**
**Friedrich-Uhde-Strasse 15**
**W-4600 Dortmund 1(DE)**

(72) Erfinder: **Buxel, Michael, Dipl.-Ing.**
**Zum Gehölz 5b**
**W-4355 Waltrop(DE)**
Erfinder: **Thieme, Horst**
**Düsseldorfer Strasse 17**
**W-4600 Dortmund 1(DE)**
Erfinder: **Pietzarka, Friedrich-Wilhelm, Dr.,**
**Dipl-Chem.**
**Gögestrasse 11**
**W-4600 Dortmund 50(DE)**
Erfinder: **Koch, Manfred**
**Poststrasse 57**
**W-4755 Holzwickde(DE)**

## Beschreibung

Die Erfindung betrifft ein Verfahren und eine Vorrichtung zur Reinigung von Gasen, insbesondere zur Entschwefelung und Entstickung von Rauchgasen aus Feuerungsanlagen durch mehrstufige Adsorption und katalytische Reaktion in im Kreuzstrom durchströmten, schwerkraftbewegten Wanderbetten aus kohlenstoffhaltigen, körnigen Materialien, wobei mindestens zwei Wanderbetten bezüglich des Gasweges derart hintereinandergeschaltet sind, daß die Entstickung im zweiten oder in einem der darauffolgenden Wanderbetten durchgeführt wird.

Nach dem Stand der Technik ist es aus DE-OS 29 11 712 bekannt, gasförmige oder feste Schadstoffe aus Gasströmen durch Adsorption und/oder Adhäsion durch schwerkraftbewegte Wanderbetten aus körnigem, kohlenstoffhaltigem Material, insbesondere Aktivkoks oder Aktivkohle, abzuscheiden, indem diese Wanderbetten im Kreuzstrom von dem zu reinigenden Gasstrom durchströmt werden. Entsprechend z.B. DE-OS 32 32 546 ist weiterhin bekannt, daß mehrere Wanderbetten, in Strömungsrichtung des zu reinigenden Gases gesehen, hintereinandergeschaltet werden, wobei zusätzlich die verschiedenen Wanderbetten mit den Gas- und Feststoffwegen untereinander so verbunden sein können, daß sich ein quasi Gegenstromprinzip ergibt. Nach dem Stand der Technik ist darüber hinaus bekannt, daß die Reinigungsoperationen stoffspezifisch auf verschiedene hintereinandergeschaltete Wanderbetten verteilt werden können. Die Entstickung wird in bekannter Weise mit Ammoniak als Reduktionsmittel durchgeführt. So wird entweder in den Anströmkanal des ersten Wanderbettes oder in den Abströmkanal des ersten Wanderbettes bzw. den Anströmkanal des zweiten Wanderbettes oder sogar in die Wanderbetten selbst Ammoniakgas verdünnt oder unverdünnt oder auch eine wässrige Ammoniaklösung eingedüst (z.B.: DE-OS 32 32 544, DE-OS 30 39 477, DE-OS 29 11 712).

Für die Entstickungsstufe gilt aufgrund der chemischen Eigenschaften, daß das in den zu reinigenden Rauchgasstrom eingedüste Ammoniak nicht selektiv mit NOx reagiert, sondern mit den übrigen Rauchgasinhaltsstoffen zum Beispiel $SO_2$, Chlorwasserstoffsäure, Fluorwasserstoffsäure und Sauerstoff Nebenreaktionen, in Konkurrenz zur gewünschten Reaktion, eingeht. Aus diesem Grund wird bei den neueren Verfahren und Vorrichtungen nach dem Stand der Technik, nach DE-OS 2911712, in einem ersten Wanderbett der weit überwiegende Teil z.B. des Schwefeldioxids aus dem Gasstrom entfernt und anschließend in einem zweiten Wanderbett nach Eindüsung von Ammoniak die Entstickung vorgenommen. Durch diese Maßnahme wird nach dem Stand der Technik bei vergleichbaren Abscheideleistungen für NOx ein sparsamerer Ammoniakverbrauch erzielt. Im übrigen wird gleichzeitig dadurch die mengenmäßige Bildung von Ammoniumsalzen auf dem kohlenstoffhaltigen, körnigen Material des Wanderbettes verringert.

Die Verfahren und Vorrichtungen nach dem Stand der Technik weisen jedoch trotz dieser Verbesserungen immer noch einen gravierenden Nachteil auf. Für die großen Gasmengen, wie sie bei Rauchgasen aus industriellen Feuerungen auftreten, müssen extrem große Apparaturen gebaut, aufgestellt und betrieben werden. Gleichzeitig hat das Gebot des sparsamen Umganges mit Energie und Rohstoffen durch die großen bewegten Massen des Adsorptionsmittels besondere Bedeutung. Im Betriebsfall werden möglichst hohe Beladungen gefahren, die dazu führen, daß über einen weiten Bereich im unteren Teil des ersten Wanderbettes ein Schwefeldioxiddurchbruch auftreten kann. Dies führt in der Praxis dazu, daß auf der Austrittsseite des ersten Wanderbettes vertikal von oben nach unten zunehmend höhere Schwefeldioxidkonzentrationen gemessen werden. Im Abströmkanal des ersten Wanderbettes bilden sich in der Folge davon Strähnen mit vergleichsweise hohen Schwefeldioxidkonzentrationen. Wird nun für die Entstickungsreaktion stromabwärts des Abströmkanals des ersten Wanderbettes Ammoniak eingedüst, wird in den Gassträhnen mit höherer $SO_2$-Konzentration eine bedeutende Menge des zugegebenen Ammoniaks durch Nebenreaktionen eliminiert und ist damit für die Entstickungsreaktion verloren. Im oberen Teil des zweiten Wanderbetts läuft die katalytische Entstickungsreaktion in diesem Fall wie geplant ab, im unteren Teil dagegen kann sie durch die Nebenreaktionen bis zum völligen Erliegen vermindert werden. Um trotzdem einen bestimmten mittleren Entstickungsgrad zu erreichen, muß infolgedessen Ammoniak im Überschuß zugegeben werden. Der Überschuß kann jedoch nicht beliebig hoch gewählt werden, da im oberen Teil des zweiten Wanderbettes der überschüssige Ammoniak durchbrechen kann und das gereinigte Rauchgas seinerseits verunreinigt.

Nach den Vorschlägen aus DE-OS 32 32 543 kann jedoch mit hohem Ammoniaküberschuß und entsprechendem Ammoniakdurchbruch gearbeitet werden, wenn in einem dritten Wanderbett, das gasseitig hinter das zweite Wanderbett geschaltet wird, Ammoniak durch Neutralisation als Ammoniumsulfat bzw. Ammoniumbisulfat aus dem Rauchgas entfernt wird. Dies wird entsprechend den Vorschlägen aus der o.g. Veröffentlichung durchgeführt, indem das mit Schwefeldioxid bzw. daraus gebildeter Schwefelsäure beladene, körnige, kohlenstoffhaltige Material mindestens teilweise als festes Material für das dritte Wanderbett eingesetzt wird.

Diese Maßnahme erhöht jedoch einerseits den Gesamtdruckverlust der Anlage drastisch und damit den

EP 0 232 731 B1

Engergieverbrauch, andererseits geht ein großer Teil des bestimmungsgemäß für die Entstickung eingesetzten Ammoniaks durch Nebenreaktion verloren.

Es wird auch gemäß DE-OS 30 14 934 Al vorgeschlagen, nach dem ersten Wanderbett im unteren Teil eine höhere Ammoniakmenge als im oberen Teil dem vorentschwefelten Rauchgas zuzufügen. Eine lokale Ammoniaküberdosierung könnte durch diese Maßnahme weitgehend verhindert werden, der lokale Anfall größerer Ammoniumsulfatmengen in der unteren Zone des zweiten Wanderbottes bleibt als Kennzeichen erhalten. Darüber hinaus ist in der Praxis mit vernünftigem Aufwand eine lokal variable Zudosierung von Ammoniak nicht zu erreichen, da das Auftreten und die örtliche Ausdehnung des Schwefeldioxiddurchbruchs, in gleicher Weise wie die darin auftretenden $SO_2$-Konzentrationen, nicht stationär sind, sondern im Betriebsfall laufend mit den Schwankungen der Schwefeldioxideingangskonzentration und der gefahrenen Last der vorgeschalteten Feuerungsanlage variieren.

Aus strömungstechnischen Gründen, u.a. um den Partikelaugtrag aus dem Wanderbett auf der Abströmseite zu vermeiden, darf die Gasgeschwindigkeit durch die Austrittsfläche einen bestimmten Betrag nicht überschreiten. Diese Grenzgeschwindigkeit ist u.a. abhängig von der Art des körnigen, kohlenstoffhaltigen Materials des Wanderbettes, der winkelstellung der nach dem Stand der Technik vorgeschlagenen jalousieartig angeordneten Bleche, die auf der Anström- bzw. Abströmseite die gasdurchlässige Wand des Wanderbettes bilden, etc.. Die Größe der Anströmfläche liegt damit apriori fest. Variabel bleibt nur die Bettiefe, um einem $SO_2$-Durchbruch entgegenzuwirken. Das bedeutet aber einen höheren Druckverlust der Anlage.

Schwefeldioxidsträhnen mit der unvermeidlichen Bildung von Ammoniumsalzen auf dem körnigen, kohlenstoffhaltigen Material des. zweiten Wanderbettes, also der Entstickungsstufe, kann darüber hinaus bei den Verfahren nach dem Stand der Technik auch zu Störungen der Durchströmung in dem betroffenen Areal des zweiten Wanderbettes führen. Dies wird dadurch hervorgerufen, daß die Adsorptionsmittelkörnchen durch das gebildete Ammoniumsulfat mit sich selbst und/oder mit dem Gehäuse verbacken. Dies ist besonders wegen der Betriebssicherheit von Bedeutung, da in solchen schlecht durchströmten Bezirken das dynamische Wärmegleichgewicht zwischen der Wärme, die durch Adsorptions-, Verdünnungs- und Reaktionswärmen im Wanderbett gebildet wird und der Wärmemenge, die als fühlbare Wärme durch Temperaturerhöhung des abströmenden Gases (der Gasmenge direkt proportional) abgeführt wird, nachhaltig gestört wird. Als Folge kann sich ein sogenannter hot-spot bilden, der unter Umständen zum Abschalten der ganzen Anlage zwingt.

Zur Beseitigung von Stickstoffoxiden aus sauerstoffarmen Abgasen ist nach DE-OS 26 35 652 ein Verfahren bekannt, das ein spezielles mit Metalloxiden vermengtes, körniges, kohlenstoffhaltiges Material als Adsorptionsmittel und Katalysator bei Temperaturen zwischen 400 u. 600 $^\circ$C einsetzt. Die Entschwefelung und Entstickung von sauerstoffarmen Rauchgasen bei Temperaturen zwischen 50 u. 200 $^\circ$C ist mit diesem Verfahren nicht möglich.

In der Praxis weisen die in den zuvor genannten oder verwandten Veröffentlichungen beschriebenen Verfahren nach dem Stand der Technik mindestens einen, jedoch meist mehrere der zuvor beschriebenen Nachteile auf. Der Erfindung liegt daher die

Aufgabe zugrunde, das Verfahren bzgl. des sparsamen Umgangs mit Energie und Rohstoffen, sowie der Maximierung der Entschwefelungs- und Entstickungsgrade zu verbessern.

Diese Aufgabe wird durch das kennzeichnende Merkmal des Patentanspruchs 1 gelöst. Als Vorteile ergeben sich:

1. Das körnige kohlenstoffhaltige Material des zweiten Wanderbettes wird zusätzlich zur katalytischen Entstickung auch zur adsorptiven Restentschwefelung des Rauchgases genutzt. Die Bettiefe, und damit der Druckverlust in dem ersten Wanderbett wird minimiert. Es sinkt der Druckverlust der Gesamtanlage und damit der Energieverbrauch.

2. Durch die gleichmäßige Verteilung des durch das erste Wanderbett durchgebrochenen Schwefeldioxids auf die gesamte Anströmfläche des zweiten Wanderbettes wird wirksam vermieden, daß lokal überhöhte Bildung von Ammoniumsalzen auf dem körnigen, kohlenstoffhaltigen Material zu Ver- oder Anbackungen im Wanderbett führt. Durch die Eigenbewegung des Wanderbettes während des gesamten Durchgangs wird das gebildete Ammoniumsulfat auf das gesamte Bettvolumen verteilt.

3. Das gesamte Bettvolumen des zweiten Wanderbettes steht zur katalytischen Entstickung zur Verfügung.

4. Lokale Ammoniakdurchhrüche durch das zweite Wanderbett werden durch gleichmäßige, stöchiometrisch angepaßte Dosierung des Ammoniaks vermieden.

Das Merkmal des ersten Anspruchs beinhaltet außerdem eine vorteilhafte Weiterentwicklung des Verfahrens. Das Verfahren wird damit auch geeignet zur Entstickung von Rauchgasen, die wegen ihrer Zusammensetzung, z.B. niedriger Sauerstoffgehalt, mit den Verfahren nach dem Stand der Technik bisher

3

nicht wirksam entstickt werden konnten. Durch die Zumischung von gasförmigen, dampf und/oder flüssigen Reaktionspartnern kann die Gleichgewichtseinstellung des Stickoxidreducktionsgleichgewichtes und der kinetische Verlauf der Gleichgewichtseinstellung vorteilhaft beeinflußt werden. Die Abscheideleistung des zweiten Bettes für die Stickstoffoxide wird dadurch maximiert, ohne durch zusätzliche Bettiefe zusätzlichen Druckverlust und damit zusätzlichen Energieverbrauch aufzubauen.

Insbesdondere wird ein sauerstoffarmes Rauchgas von Stickoxiden befreit, wobei deutlich höhere Abscheideleistungen für die Stickstoffoxide erreicht werden.

Die Aufgabe, das erfindungsgemäße Verfahren in der Praxis zur Ausführung zu bringen, wird mit den kennzeichnenden Merkmalen des Vorrichtungsanspruchs 2 besonders gut gelöst. Insbesondere besteht die Lösung darin, in einer kompakten, platzsparenden Prozeßkammer die nach Anspruch 1 erfindungsgemäßen Verfahrensschritte optimal durchzuführen.

Ausführungsbeispiele der Erfindung sind in den Abbildungen gegeben.

Fig. 1    zweistufige Rauchgasreinigung; schematische Darstellung der Kopplung zweier Wanderbetten über eine erfindungsgemäße Prozeßkammer.

Fig. 2    Zweistufige Rauchgasreinigung; schematische Darstellung einer Kompaktanordnung von zwei mittels einer erfindungsgemäßen Prozeßkammer gekoppelten Wanderbetten.

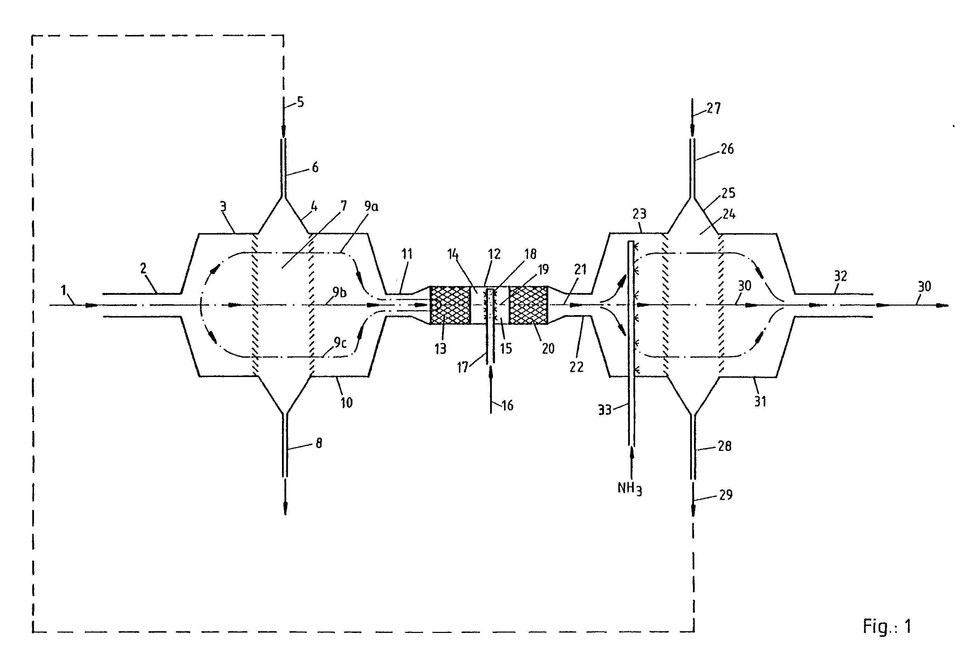

Nach Fig. 1 strömt ein Gasstrom 1, vorzugsweise ein Rauchgasstrom, aus einer Feuerungsanlage über eine Leitung 2 in den Anströmkanal 3 eines Wanderbettgehäuses 4, gefüllt mit einem körnigen, kohlenstoffhaltigen Adsorptionsmittel, vorzugsweise Aktivkoks, ein. Während der Aktivkoks 5 als trockenes, körniges, frisches oder regeneriertes, unbeladenes oder teilbeladenes Material das erste Gehäuse 4 über die Leitung 6 betritt, durch das sich im ersten Gehäuse 4 aufbauende, vertikal nach unten fließende Wanderbett 7 bewegt und schließlich über die Leitung 8 am unteren Teil des ersten Gehäuses 4 das Wanderbett 7 wieder verläßt, strömt das zu reinigende Rauchgas 1 dazu horizontal im Kreuzstrom durch dieses Wanderbett. Auf der Austrittsseite des ersten Gehäuses 4 tritt der nun teilgereinigte Rauchgasstrom 9 bzw. 9 a, 9 b, 9 c in einen Abströmkanal 10 ein. Aus diesem Abströmkanal 10 wird der vorgereinigte Rauchgasstrom über eine Leitung 11 in die erfindungsgemäße Prozeßkammer 12 geleitet. Während der Rauchgasstrom 1 durch das erste Wanderbett 7 strömt, werden die unerwünschten Rauchgasinhaltstoffe teilweise auf dem körnigen, kohlenstoffhaltigen Material, vorzugsweise Aktivkoks, zurückgehalten. Während z.B. die Halogenenwasserstoffe und $NO_2$, wegen ihrer geringen Konzentration bei den in der Praxis gefahrenen Wanderungsgeschwindigkeiten des Wanderbettes 7, nicht bis auf ihre Grenzbeladung angereichert werden, wird diese für Schwefeldioxid im unteren Teil des Wanderbettes 7 erreicht, so daß es zu einem beträchtlichen $SO_2$-Durchbruch kommt. Das im ungereinigten Rauchgasstrom 1 enthaltene NO, als überwiegender Anteil am Gesamtstickstoffoxidgehalt, wird von dem ersten Wanderbett 7 praktisch nicht zurückgehalten. Es verläßt das Wanderbett 7 mit dem teilgereinigten Rauchgasstrom 9. Im teilgereinigten Rauchgasstrom 9 bzw. 9 a, 9 b, 9 c wird in dem oberen Stromfaden 9 a praktisch kein $SO_2$ mehr gefunden. Im mittleren Stromfaden 9 b wird je nach Fahrweise und Ausgangskonzentration im ungereinigten Rauchgas bis 100 mg $SO_2$ pro m³ i.N., im unteren Strömungsfaden 9 c bis zu 1500 mg $SO_2$ pro m³ i.N. gefunden. Diese Strömungsfäden unterschiedlicher Konzentration strömen nun über die Leitung 11 in die Prozeßkammer 12 ein.

Nach dem erfindungsgemäßen Verfahren und der entsprechenden erfindungsgemäßen Vorrichtung werden nun die Strömungsfäden 9 a, 9 b, 9 c des teilgereinigten Rauchgases 9 in dem Vormischkanal 13 zu einem Strom vorgereinigten Rauchgases mit nivellierter $SO_2$-Konzentration 14 vermischt. Dieser Strom 14 tritt nun in einen Konditionierungskanal 15 ein, in dem als Strom 16 über Leitung 17 mittels Eindüsungsvorrichtungen 18 ggf. Sauerstoff, Luft, sauerstoffhaltige Gasgemische und/oder Wasser bzw. Wasserdampf eingedüst werden. Der dadurch entstehende vorgereinigte, $SO_2$-nivellierte, konditionierte Rauchgasstrom 19 tritt nach Verlassen des Konditionierungskanals 15 in einen Nachmischkanal 20 ein. Dieser Nachmischkanal 20 kann als leeres Beruhigungsvolumen ausgeprägt sein. Vorzugsweise wird jedoch mit Strömungshilfen eine statische Nachvermischung vorgenommen. Das nunmehr vorgereinigte, konditionierte und in den Konzentrationen der Inhaltstoffe homogenisierte Rauchgas bildet ein optimales Entstickungsstartgas 21. Das Entstickungsstartgas 21 verläßt mit dem Austritt aus dem Nachmischkanal 20 die Prozeßkammer 12 über die Leitung 22 und wird im Anströmkanal 23 des zweiten Wanderbettes 24 aus kohlenstoffhaltigem körnigen Material, vorzugsweise Aktivkoks, über die mit Verteilerdüsen oder einfachen Bohrungen versehene Leitung 33 in bekannter Weise mit Ammoniak versetzt. Danach tritt es in das zweite Wanderbett ein. Auch dieses Wanderbett bewegt sich in einem Gehäuse 25 vertikal von oben nach unten. Diesem Wanderbett 24 fließt über Leitung 26 mit Strom 27 frisches und/oder regeneriertes Adsorptionsmittel zu. Aus Leitung 28 wird mit Strom 29 kontinuierlich beladenes Adsorptionsmittel abgezogen, das in an sich bekannter Weise, ggf. in den Zustrom 5 des ersten Wanderbettes 7 übergeführt wird. Das mit Ammoniak versetzte Entstickungsstartgas 21 strömt nun im Kreuzstrom horizontal durch das sich vertikal von oben nach unten bewegende ffanderbett 24. Auf der Austrittsseite des Wanderbettes 24 strömt das aus dem mit Ammoniak versetzten Entstickungsstartgas 21 entstandene Reingas 30 in einen Abströmkanal 31, aus dem es über Leitung 32 ausströmt.

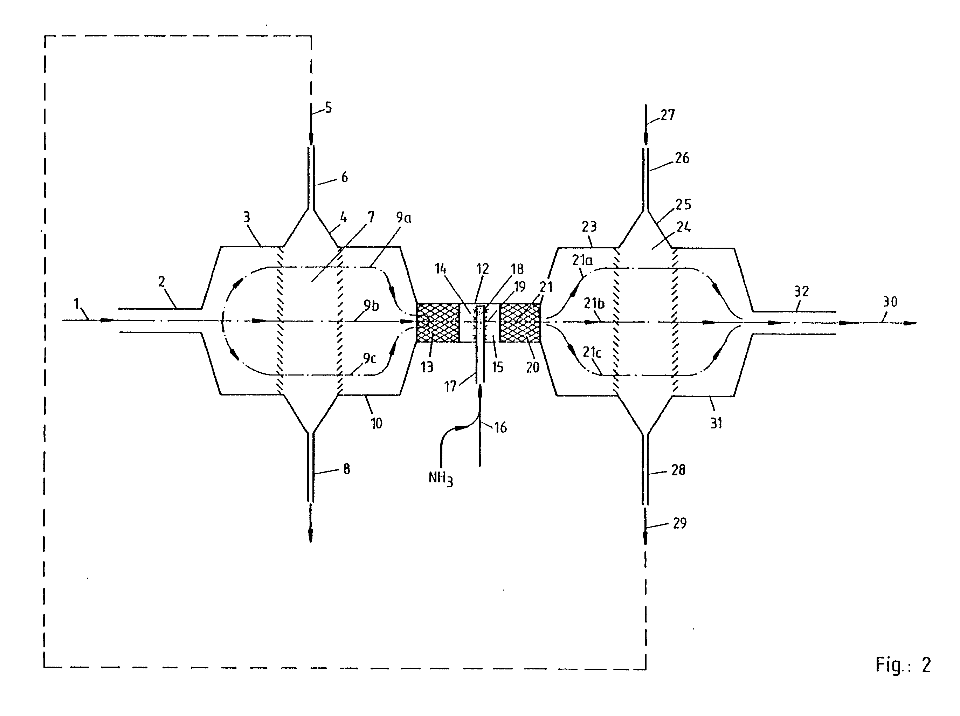

Entsprechend Fig. 2 kann in der ausführungsmäßigen Ausgestaltung des Verfahrens ohne weiteres, ohne die erfinderischen Merkmale zu verlassen, auf die Verwendung der Leitungen 11 und 21 verzichtet werden. In diesem Fall strömt das vorgereinigte Rauchgas 9 mit den Strömungsfäden unterschiedlicher $SO_2$-Konzentration 9 a, 9 b, 9 c direkt und unmittelbar aus dem Abströmkanal 10 des ersten Wanderbettes 7 in die Prozeßkammer 12. In gleicher Weise verläßt das im Nachmischkanal 20 der Prozeßkammer 12 entstandene, nun über Leitung 17 und Vorrichtung 18 mit Ammoniak versetzte Entstickungsstartgas den Nachmischkanal 20 direkt, um unmittelbar in die Anströmkammer 23 des zweiten Wanderbettes 24 einzuströmen. In den Teilgasströmen des ammoniakhaltigen Entstickungsgases 21 a, 21 b, 21 c liegen nun alle Inhaltsstoffe des Rauchgases in gleichen Konzentrationen vor.

Das erfindungsgemäße Verfahren sei an dem folgenden Beispiel exemplarisch erläutert:

Beispiel 1:

Das Verfahren und die Vorrichtung zur Entschwefelung und Entstickung von ca. 170.000 m³/h i.N. Rauchgas, welches mit einer Temperatur von rund 120 °C und einem $SO_2$-Gehalt von ca. 4000 mg/m³ i.N. und einem NOx-Gehalt von ca. 500 mg/m³ i.N. an der Anlagengrenze aus einer Feuerungsanlage übernommen wird, sei so aufgebaut, daß ein erstes Wanderbett rund 90 % des mit dem Rauchgas eingetragenen Schwefeldioxids zurückhält, nach Eindüsen von Ammoniak in dieses vorgereinigte Rauchgas in einem zweiten Wanderbett rund 50 % des im Rauchgas enthaltenen NOx eliminiert und zusätzlich das restliche $SO_2$ abgeschieden wird, so daß ein Gesamtentschwefelungsgrad von über 98 % erreicht wird. Die Anströmflächen beider Wanderbetten, bestehend aus handelsüblichem Aktivkoks sind jeweils rund 260 m² groß. Die Abmaße ergeben sich zu rund 18,6 m Breite und rund 14 m Höhe. Im Betriebsfall der Anlage stellt sich in den Wanderbetten ein stationärer Zustand ein. Die Wanderbetten werden im bestimmungsgemäßen Betriebszustand gleichmäßig quer von den Rauchgasen durchströmt. Die Abströmfläche der Wanderbetten hat jeweils die gleiche Größe wie die entsprechende Anströmfläche. Auf der Austrittsseite des ersten Wanderbettes werden etwa im oberen Viertel der Höhe keine meßbaren Schwefeldioxidanteile mehr gefunden. Im Gegensatz dazu beträgt beispielsweise im unteren Bereich von 0 bis ca. 1,50 m Höhe der durchschnittliche örtliche Abscheidegrad nur ca. 67 %. Ausgehend von den zuvor genannten Randbedingungen, sind in der Tabelle Prozeßparameter, die bei Durchführung des erfindungsgemäßen Verfahrens gefunden werden, entsprechend Prozeßparametern für 2 Konfigurationen nach dem Stand der Technik angegeben. Die Konfiguration 1 entspricht dem in DE-OS 29 11 712 gemäß Fig. 1 vorgeschlagenen Verfahren. Die Konfiguration 2 entspricht einem Verfahren, das DE-OS 32 32 543 gem. Fig. 3 veröffentlicht wurde. Die Vorteile des erfindungsgemäßen Verfahrens bezüglich des Druckverlustes, des mechanischen Adsorptionsmittelverlustes und des auftretenden Ammoniakdurchbruches werden sofort sichtbar. Die Konfiguration 1, in der mit einem beschleunigten Adsorptionsmittelumlauf der Schwefeldioxiddurchbruch soweit herabgesetzt wurde, daß An- und Verbackungen im zweiten Wanderbett vermieden werden können, führt zu einem vergleichsweise beinahe doppelt so großen Adsorptionsmittelverlust wie er im erfindungsgemäßen Verfahren auftritt. Darüber hinaus wird bei gleichem Druckverlust, entsprechend gleicher Bettiefe der Wanderbetten, wie im erfindungsgemäßen Verfahren, zwar ca. ein Drittel der notwendigen Ammoniakmenge, die dem Betrage nach jedoch klein ist, eingespart, es tritt jedoch ein 50 % höherer mittlerer Ammoniakdurchbruch als im erfindungsgemäßen Verfahren auf. Dieser höhere Ammoniakdurchbruch könnte durch eine Vergrößerung der Bettiefe des zweiten Wanderbettes um ca. 0,5 m auf den Wert des erfindungsgemäßen Verfahrens gesenkt werden, jedoch stiege der Druckverlust der Anlage damit auf ca. 115 % des Druckverlustes im erfindungsgemäßen Verfahren an.

Tabelle:

| Ort | Prozessgröße | Verfahren nach Stand der Technik Konfig.: 1 | | Konfig.: 2 | | | Erfindungsgemäßes Verfahren | |
|---|---|---|---|---|---|---|---|---|
| Gesamt-Anlage | Druckverlust rel. [%] | 100 | | 120 | | | 100 | |
| | NH3-Verbrauch rel. [%] | 66 | | 100 | | | 100 | |
| | mittl. NH3 Durchbr. [mg/m³ i.N.] | 60 | | <5 | | | <40 | |
| | Mech. Adsorptionsm. Verlust rel. [%] | 184 | | 111 | | | 100 | |
| | Gesamt Bettiefe [m] | 3,5 | | 4,2 | | | 3,5 | |
| | Bett Nr. | 1 | 2 | 1 | 2 | 3 | 1 | 2 |
| | Bettiefe (m) | 1,75 | 1,75 | 1,75 | 1,75 | 0,7 | 1,75 | 1,75 |
| Flächensegment 0-1,5 m Höhe | SO2-Durchbruch [mg/m³ i.N.] | 1330 | 0 | 1330 | 0 | - | 1330 | 0 |
| | NH3Konz. [mg/m³ i.N.] | - | 210 | - | 320 | - | - | 320 |
| | Ammon(bi)-sulfatbildung [mol/h] | - | 78 | - | 380 | <3 | - | 77 |
| | NH3-Durchbruch [mg/m³ i.N.] | - | <5 | - | <5 | - | - | <40 |
| Flächensegment 12,5-14m Höhe | SO2-Druchbruch [mg/m³ i.N.] | 0 | - | 0 | - | - | 0 | - |
| | NH3 Konz. [mg/m³ i.N.] | - | 210 | - | 320 | - | - | 320 |
| | Ammonium(bi)-sulfatbildung [mol/h] | - | <1 | - | <1 | 185 | - | 77 |
| | NH3-Durchbruch [mg/m³ i.N.] | - | 100 | - | 175 | <5 | - | <40 |

Im Verfahren nach der Konfiguration 2 ist der mittlere Ammoniakdurchbruch nach dem zweiten Wanderbett so groß, daß er mittels einer etwa 0,7 m starken dritten Wanderschicht, die mit beladenem kohlenstoffhaltigen, körnigen Material aus dem ersten Wanderbett gespeist wird und auf der Gasseite im zweiten Wanderbett nachgeschaltet ist, abgefangen werden muß. Bei gleichem Ammoniakverbrauch erhöht sich in dieser Konfiguration der Druckverlust auf rund 120 % des Druckverlustes nach dem erfindungsgemäßen Verfahren. Die zusätzliche Transportschlaufe zum dritten Wanderbett erzeugt darüber hinaus einen zusätzlichen Adsorptionsmittelverlust. Dieser ist um rund 10 % höher als beim erfindungsgemäßen Verfahren.

Das Verfahren nach Konfiguration 2 bringt darüber hinaus noch die Gefahr mit sich, daß durch die großen Mengen Ammoniumsulfat bzw. Ammoniumbisulfat - etwa fünfmal mehr als im erfindungsgemäßen Verfahren -, die im unteren Teil des zweiten Wanderbettes in den Bereichen nahe der Eintrittsfläche, aber auch im oberen Teil des dritten Wanderbettes, gebildet werden, An- bzw. Verbackungen des körnigen, kohlenstoffhaltigen Materials entstehen.

Die Einstellung gewünschter Konzentrationen der Reaktanten im Konditionierungskanal (15) der Prozeßkammer (12), nach Verlassen des hautsächlich der Entschwefelung dienenden ersten Wanderbettes 7, entsprechend den Ansprüchen 2-4, sei im folgenden beispielhaft beschrieben:

Beispiel 2:

An der Anlagengrenze einer Entschwefelungs- und Entstickungsvorrichtung nach der vorliegenden Erfindung tritt ein sauerstoffarmes Rauchgas mit ca. 120 °C ein, das aus einer Feuerung kommt. Das Rauchgas ist im wesentlichen dadurch gekennzeichnet, daß es ca. 23 Vol.% Wasserdampf, ca. 1 Vol.% Sauerstoff und ca. 100 Vol.ppm NO enthält. Nach dem Durchtritt durch das erste Wanderbett und nach Passieren des Vormischkanals 13 der Prozeßkammer 12 wird dem vorentschwefelten homogenisierten Rauchgas über die Leitung 17 und einen Düsenstock 18 soviel Luft beigemischt (Strom 16), daß der Sauerstoffgehalt des vorgereinigten homogenisierten Rauchgases 14 nunmehr konditioniert 19 rund 5 Vol.% Sauerstoff enthält. Diesem vorentschwefelten, homogenisierten und konditionierten Rauchgasstrom 19 wird noch ca. 25 mg Ammoniak pro $Nm^3$ beigemischt. In dem Nachmischkanal 20 wird die entstandene Reaktionsmischung noch einmal gleichmäßig durchmischt. Die entstandene Gasmischung, Entstickungsstartgas, Strom 21 durchströmt nun das zweite Wanderbett, in dem bei Temperaturen von ca. 120 °C die katalytische Entstickungsreaktion abläuft. Die Analyse des gereinigten Rauchgases 33 ergibt einen NO-Umsatz von ca. 53 %. Bei Durchführung dieser Rauchgasreinigung ohne Konditionierung mit Luft und ohne die entsprechende Vorrichtung können nur maximal rund 35 % des NO's umgesetzt werden.

## Patentansprüche

1.  Verfahren zur Entschwefelung und Entstickung von Rauchgasen aus Feuerungsanlagen durch einstufige Adsorption des Schwefeldioxids und einstufige Reduktion dar Stickoxyde mit $NH_3$ in im Kreuzstrom durchströmten, schwerkraftbewegten Wanderbetten aus kohlenstoffhaltigen, körnigen Materialien, **wobei**
    - die Wanderbetten bezüglich des Rauchgasstroms hintereinander geschaltet sind,
    - in einem ersten Wanderbett (7) die Entschwefelung durchgeführt wird,
    - in einem zweiten Wanderbett die Entstickung mittels $NH_3$ durchgeführt wird,

    **dadurch gekennzeichnet, daß**
    - das aus dem ersten Wanderbett (7) austretende teilgereinigte Rauchgas (9), welches einen örtlich variablen Schwefeldioxidkonzentrationsgradienten aufweist, einer Vormischung unterworfen wird,
    - das vorgemischte, teilgereinigte Rauchgas (14), falls seine Zusammensetzung nicht geeignet zur Entstickung ist, mit Sauerstoff, Luft und/oder Wasser bzw. Wasserdampf versetzt wird,
    - das so entstandene teilgereinigte, konditionierte Rauchgas (19) einer Nachmischung unterworfen wird, so daß ein Entstickungsrohgas (21) mit homogener Konzentrationsverteilung aller Gasinhaltsstoffe entsteht,
    - das teilgereinigte Rauchgas entweder vor oder nach Nachmischung mit $NH_3$ versetzt wird.

2.  Vorrichtung zur Durchführung des Verfahrens gemäß Anspruch 1, bestehend aus zwei Gehäsen (4, 25). die für die Aufnahme von schwerkraftbewegten Wanderbetten (7, 24) aus körnigem, Kohlenstoffhaltigen Material geeignet, mit Leitungen für die Zufuhr (6, 26) und Leitungen für den Abzug (8, 28) des Adsorptionsmittels versehen sind. die weiterhin auf der Anströmseite einen Anströmkanal (3, 23) mit einer Zuleitung (2, 21) und auf der Abströmseite einen Abströmkanal (10, 31) mit einer entsprechenden Abströmleitung (11, 32) besitzen, und die Vorrichtung eine Leitung für die Zufuhr van Ammoniak ($NH_3$) nach dem ersten Wanderbett aufweist,

    **dadurch gekennzeichnet, daß**
    eine festverbundene Einheit aus den zwei Gehäusen (4, 25) in der Weise entsteht, daß der Abströmkanal (10) des ersten Gehäuses (4) über eine Leitung (11) fest und gasdicht - zum Beispiel geflanscht, geschweißt, geklebt, genietet -, mit einer Prozeßkammer (12), die ihrerseits in einen Vormischkanal (13), einen Konditionierungskanal (15) und einen Nachmischkanal (20) unterteilt ist, wobei der Konditionierungskanal (15) eine Zuführungsleitung (17) für gasförmige, dampfförmige und/oder flüssige Medien und eine Eindüsvorrichtung (18) enthält, verbunden ist und die Austrittsöffnung der Prozeßkammer (12) ihrerseits über eine Leitung (21) mit dem Anströmkanal (23) eines zweiten Gehäuses (25) ebenfalls fest und gasdicht verbunden ist und die Leitung für die Zufuhr von Amoniak (NH₃) entweder in die Zuführungsleitung (17) oder in dem Anströmkanal (23) mündet.

3. Vorrichtung nach Anspruch 2, **dadurch gekennzeichnet,** daß die Prozeßkammer (12) unter Weglassen der Zuleitung (11) direkt und unmittelbar mit dem Abströmkanal (10) des ersten Gehäuses (4) in offener Verbindung steht und die Austrittsöffnung der Prozeßkammer (12) unter Weglassen der Austrittsleitung (21) mit dem Anströmkanal (23) des zweiten Gehäuses (25) ebenfalls direkt in offener Verbindung steht.

## Claims

1. Process for the desulphurization of and NO$_x$ removal from flue gas discharged by firing stations, using a single-stage adsorption for sulphur dioxide elimination and a single-stage reduction of the nitrogen oxides with the aid of NH₃ in gravity-flow moving beds of granular carbonaceous material contacted by a transverse stream of the gas,
   - the moving beds being arranged in series with reference to the gas stream
   - the desulphurization taking place in the first bed (7) and
   - the NO$_x$ elimination taking place in a second bed using NH₃,

   **characterized in that**

   - the pretreated flue gas (9) leaving the first moving bed (7) and having a locally variable sulphur dioxide concentration gradient is subjected to preliminary mixing;
   - the pretreated pre-mixed flue gas (14) is mixed with oxygen, air and/or water or water vapours if the flue gas composition is unsuitable for NO$_x$ elimination;
   - the pretreated conditioned flue gas (19) obtained in these steps is sent to a final mixing zone where mixing is continued to obtain an effluent gas (21) with the maximum possible homogeneous concentration of the flue gas constituents;
   - NH₃ is added to the pretreated flue gas upstream or downstream of the final mixing zone.

2. Plant for performing the process according to claim 1, comprising two housings (4, 25) which are suitable for accommodating the gravity-flow moving beds (7, 24) of granular carbonaceous material, with pipes for the admission (6, 26) and for the withdrawal (8, 28) of the adsorption agent and which are further provided on the inlet side with an inlet duct (3, 23), including feed lines (2, 21), and on the outlet side with an outlet duct (10, 31) and corresponding outlet lines (11, 32), said plant also having an inlet pipe for NH₃ admission downstream of the first moving bed,

   **characterized in that**

   an interconnected unit of two housings (4, 25) is obtained in that the outlet duct (10) of the first housing (4) has a line (11) providing a firm and gas-tight connection of the flanged, welded, glued, riveted or any other type with the process chamber (12) which is divided into a premixing duct (13), a conditioning duct (15) and a final mixing duct (20), the conditioning duct (15) having a feed pipe (17) for gaseous, vaporous and/or liquid fluids and an' injection device (18), the outlet opening of the process chamber (12) having line (21) with a gas-tight connection to the inlet duct (23) of the second housing (25), and the NH₃ admission line being connected either to feed pipe (17) or inlet duct (23).

3. Plant according to claim 2,

   **characterized in that**

   process chamber (12) has a direct open connection to the discharge duct (10) of the first housing (4), feed line (11) thus being omitted, and in that the outlet opening of the process chamber (12) has also a direct open connection to the inlet duct (23) of the second housing (25), thus omitting discharge line (12).

## Revendications

1. Procédé pour la désulfuration et la dénitrification des gaz de fumée sortant des installations de chauffe, à l'aide d'une adsorption mono-étagée du gaz sulfureux et une réduction mono-étagée des protoxydes d'azote mettant en oeuvre $NH_3$ dans un lit mobile de granulés carboniques, à écoulement par gravité et à courant transversal,
- les lits mobiles étant disposés en série par rapport au flux du gaz de fumée,
- la désulfuration ayant lieu dans le premier lit (7), et
- la dénitrification ayant lieu dans le deuxième lit où l'on utilise $NH_3$,
caractérisé en ce que

- le gaz de fumée (9) pré-traité dans le premier lit (7) et dont la teneur en gaz sulfureux varie localement, est assujetti à un mélange prélinimaire;
- le gaz de fumée (14) pré-mélangé et pré-traité est mélangé avec de l'oxygène, de l'air et/ou de l'eau ou de la vapeur si la composition du gaz ne convient pas pour la dénitrification;
- le gaz de fumée (19) résultant de cette procédure est assujette à un mélange final, de sorte que l'effluent gazeux (21) ait une concentration homogène de tous les composants du gaz;
- le gaz de fumée pré-traité est mélangé avec $NH_3$ en amont ou en aval de la zone de mélange final.

2. Dispositif pour la réalisation du procédé selon la revendication 1, qui consiste en deux carcasses (4,25) prévues pour les lits mobiles de granulés carboniques (7,24), à écoulemont par gravité, munies de conduites d'amenée (6,26) et d'évacuation (8,28) pour l'adsorbant, et en plus équipées d'une gaine d'entrée (3,23) avec la conduite d'amenée (2,21) et d'une gaine de sortie (10,31) avec la conduite d'amenée pour $NH_3$ en aval du premier lit,

caractérisé en ce que
les deux carcasses (4,25) sont fermenent liées de telle manière que la gaine de sortie (10) de la première carcasse (4) soit connectée à la chambre de procédé (12), moyennant la conduite (11), la connexion étant du type bridé, soudé, collé ou riveté et étanche au gaz, et que la dite chambre soit divisée en une gaine de mélange préliminaire (13), une gaine de conditionnement (15) et une gaine de mélange final (20), la gaine (15) ayant une conduite d'amenée (17) pour des fluides gazeux, vaporeux et/ou liquides, et que l'ouverture de sortie de la chambre (12) soit munie d'une conduite (21) étanche au gaz et connectée à la gaine d'entrée (23) de la deuxième carcasse, et que la conduite d'amenée $NH_3$ soit reliée ou à la conduite d'amenée (17) ou à la gaine d'amenée (23).

3. Dispositif selon la revendication 2,

caractérisé en ce que
la chambre de procédé (12) est connectée de manière ouverte et directe à la gaine de sortie (10) de la première carcasse (4), la ligne d'amenée (11) étant supprimée, et que l'ouverture de sortie de la chambre (12) est également munie d'une liaison directe et ouverte avec la gaine d'entrée (23) de la deuxième carcasse (25), la conduite de sortie (21) étant supprimée.

Fig.: 1

NH₃

Fig.: 2

EP 0 232 731 B1